# EUROPEAN PATENT APPLICATION

(11) **EP 4 819 328 A1**
(43) Date of publication of application: **07.10.2026**
(21) Application number: 26167939.3
(22) Date of filing: 26.03.2026
(51) Int. Cl.: H01M 50/213, H01M 10/42, H01M 10/48, H01M 50/284, H01M 50/503, H01M 50/507, H01M 50/519, H01M 50/533, H01M 50/569, H01M 50/586, H01M 50/593

(54) **BATTERY PACK**

(30) Priority: 02.04.2025 KR 20250042607; 29.12.2025 KR 20250212872
(71) Applicant: SAMSUNG SDI CO., LTD., Yongin-si, Gyeonggi-do 17084 (KR)
(72) Inventor: KANG, Iloh, 17084 Yongin-si (KR)
(74) Representative: Marks & Clerk LLP

(57) **Abstract**

A battery pack includes a first battery module and a second battery module each including battery cells, busbars electrically connecting the battery cells to each other, and a circuit board positioned between the first battery module and the second battery module. The circuit board includes a tabs electrically connected to the busbars, and each of the tabs includes at least two fastening portions extending from opposite ends of each of the tabs, and the at least two fastening portions extend into a surface of the circuit board such that the tabs are coupled to the circuit board.

## Description

### BACKGROUND

### 1. Field

The disclosure relates to a battery pack.

### 2. Description of the Related Art

Unlike primary cells that cannot be recharged, battery cells are cells that can be repeatedly charged and discharged and are used as a means of supplying power for various electronic devices.

Depending on the type of electronic device, battery cells may be used as single cells or as a plurality of cells electrically connected to each other. For example, small devices such as mobile phones may operate for a certain period of time with the output and capacity of a single battery cell, whereas in cases such as electric vehicles where high output and high capacity are required, a plurality of battery cells may be used, which are connected to each other in series, parallel, or series-parallel.

The above-described information disclosed in the background technology of the disclosure is only intended to improve understanding of the background of the disclosure and therefore may include information that does not constitute prior art.

### SUMMARY

The embodiments aim to provide a battery pack having improved structural stability of a circuit board.

However, the problems to be solved by the disclosure are not limited to the problems mentioned above, and other problems and advantages of the disclosure that are not mentioned may be understood by the following description and will be more clearly understood by the embodiments of the disclosure. In some embodiments, it will be appreciated that the problems and advantages to be solved by the disclosure may be realized by the means and the combinations thereof indicated in the scope of the claims.

A battery pack according to an aspect of the disclosure includes: a first battery module and a second battery module each including a plurality of battery cells; busbars electrically connecting the plurality of battery cells to each other; and a circuit board positioned between the first battery module and the second battery module, wherein the circuit board includes a plurality of tabs electrically connected to the busbars, and each of the plurality of tabs includes at least two fastening portions extending from opposite ends of each of the tabs, and the at least two fastening portions are inserted into a surface of the circuit board so that the tabs may be coupled to the circuit board.

In an embodiment, the tabs may include an overlapping portion overlapping with the circuit board and an extension portion extending from the overlapping portion to the outside of the circuit board, and the extension portion may be bent parallel to a side of the circuit board.

In an embodiment, the circuit board may include a concave portion in the shape of a groove inwardly concave from the side of the circuit board at the position corresponding to the extension portion.

In an embodiment, the extension portion may be bent at an angle greater than 0° and less than or equal to 90° with respect to the overlapping portion.

In an embodiment, the fastening portion may be positioned at the overlapping portion, and the fastening portion may be bent in the direction of the circuit board to be inserted into the circuit board in the thickness direction of the circuit board.

In an embodiment, the extension portion may be electrically connected to the busbar, and the overlapping portion may be electrically connected to the circuit board.

In an embodiment, the fastening portion may include a first fastening portion and a second fastening portion at the opposite side of the first fastening portion, and the first fastening portion and the second fastening portion may be positioned at different heights from the bottom surface of the tab.

In an embodiment, a busbar of the second battery module, which is arranged between two adjacent busbars of the first battery module, may have different separation distances from the two adjacent busbars of the first battery module.

In an embodiment, the plurality of tabs may be arranged along an edge of a side of the circuit board.

In an embodiment, the plurality of tabs may be arranged along the edges of opposite sides of the circuit board, and the plurality of tabs arranged along the opposite edges of the circuit board may be arranged to have the same shape when rotated 180° with respect to the center of the circuit board.

A battery pack according to another aspect of the disclosure includes: a first battery module and a second battery module each including a plurality of battery cells; busbars electrically connecting the plurality of battery cells to each other; and a circuit board positioned between the first battery module and the second battery module, wherein the circuit board includes a plurality of tabs electrically connected to the busbars, and each of the plurality of tabs includes at least two fastening portions extending from opposite ends of each of the tabs, and each of the fastening portions is bent in the thickness direction of the circuit board to be inserted into the circuit board in the thickness direction of the circuit board, and the heights from the bottom surfaces of the tabs to the fastening portions may differ from each other.

In an embodiment, the tabs may include an overlapping portion overlapping with the circuit board and an extension portion extending from the overlapping portion to the outside of the circuit board, and the extension portion may be bent parallel to a side of the circuit board.

In an embodiment, the circuit board may include a concave portion in the shape of a groove inwardly concave from the side of the circuit board at the position corresponding to the extension portion.

In an embodiment, the extension portion may be bent at an angle greater than 0° and less than or equal to 90° with respect to the overlapping portion.

In an embodiment, the fastening portion may be positioned at the overlapping portion, and the at least two fastening portions may be inserted into a surface of the circuit board.

In an embodiment, the extension portion may be electrically connected to the busbar, and the overlapping portion may be electrically connected to the circuit board.

In an embodiment, the fastening portion may include a first fastening portion and a second fastening portion at the opposite side of the first fastening portion, and the first fastening portion and the second fastening portion may be positioned at different heights from the bottom surface of the tab.

In an embodiment, a busbar of the second battery module, which is arranged between two adjacent busbars of the first battery module, may have different separation distances from the two adjacent busbars of the first battery module.

In an embodiment, the plurality of tabs may be arranged along an edge of a side of the circuit board, and the busbar may be connected to each of the tabs.

In an embodiment, the plurality of tabs may be arranged along the edges of opposite sides of the circuit board, and the plurality of tabs arranged along the opposite edges of the circuit board may be arranged to have the same shape when rotated 180° with respect to the center of the circuit board.

At least some of the above and other features of the invention are set out in the claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a perspective view schematically illustrating a battery pack according to an embodiment;
FIG. 2 is a perspective view schematically illustrating a battery cell, which is an example of a unit cell of the battery pack of FIG. 1;
FIG. 3 is a cross-sectional view schematically illustrating an example of an electrode assembly of a battery cell, which is an example of a cross section taken along line A-A' of FIG. 2;
FIG. 4 is a plan view schematically illustrating an example of the battery pack of FIG. 1;
FIG. 5 is a diagram schematically illustrating an example of area A of FIG. 4;
FIGS. 6 and 7 are perspective views schematically illustrating an example of a circuit board; and
FIGS. 8 to 10 are diagrams schematically illustrating an example of a tab of FIG. 7.

### DETAILED DESCRIPTION

The disclosure may undergo various modifications and have various embodiments, and specific embodiments are illustrated in the drawings and described in detail in the detailed description. However, this is not intended to limit the disclosure to specific embodiments, but should be understood to include all transformations, equivalents, or substitutes included in the technical scope of the disclosure. In explaining the disclosure, in case that it is determined that the detailed description of the related known technology may obscure the gist of the disclosure, the detailed description may be omitted.

The terms first, second, or the like may be used to describe various components, but the components should not be limited by the terms. The terms may be used only to distinguish one component from another.

The terminology used in the application is used only to describe specific embodiments and is not intended to limit the disclosure. Singular expressions may include plural expressions unless the context clearly indicates otherwise. In some embodiments, in each drawing, components may be exaggerated, omitted, or schematically illustrated for convenience and clarity of explanation, and the size of each component does not entirely reflect the actual size.

In the description of each component, in case that it is described as being formed "on" or "under", "on" and "under" may include both those formed directly or through the intervention of other components, and the criteria for "on" and "under" are explained based on the drawings.

Hereinafter, the embodiments of the disclosure will be described in detail with reference to the attached drawings. When describing with reference to the attached drawings, identical or corresponding components may be assigned the same drawing numbers and redundant descriptions thereof may be omitted.

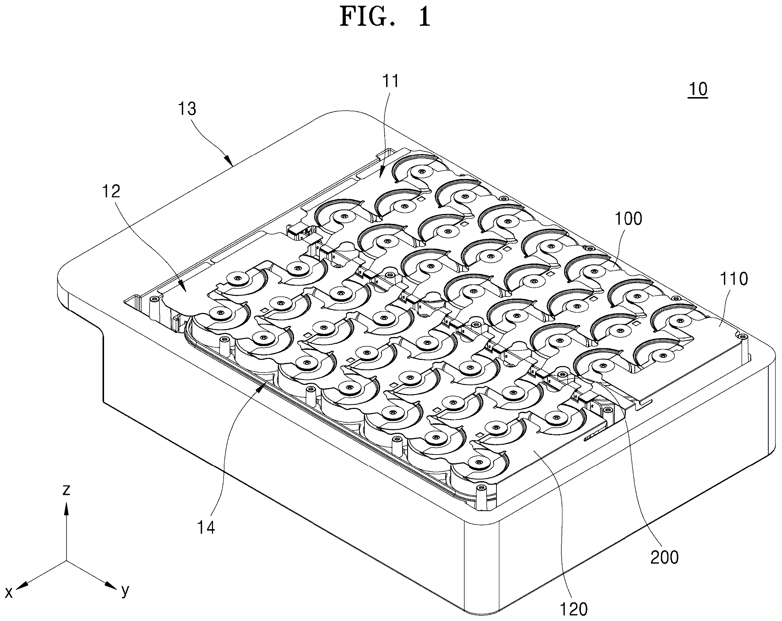

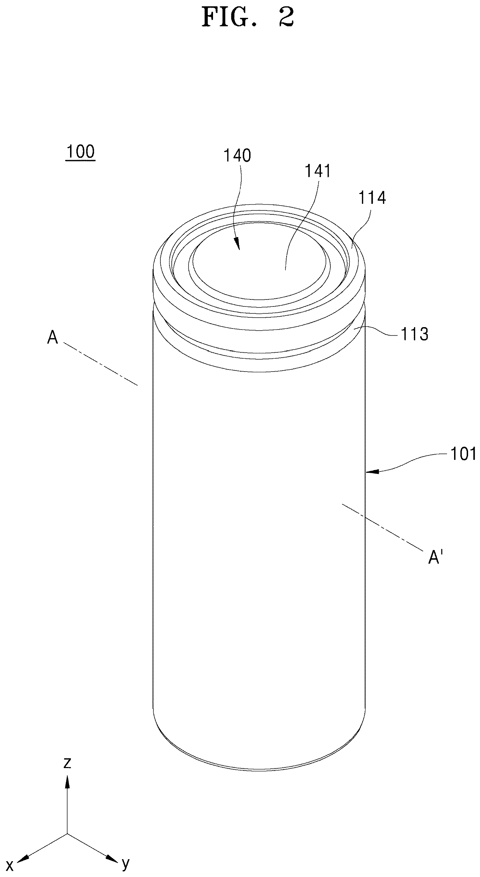

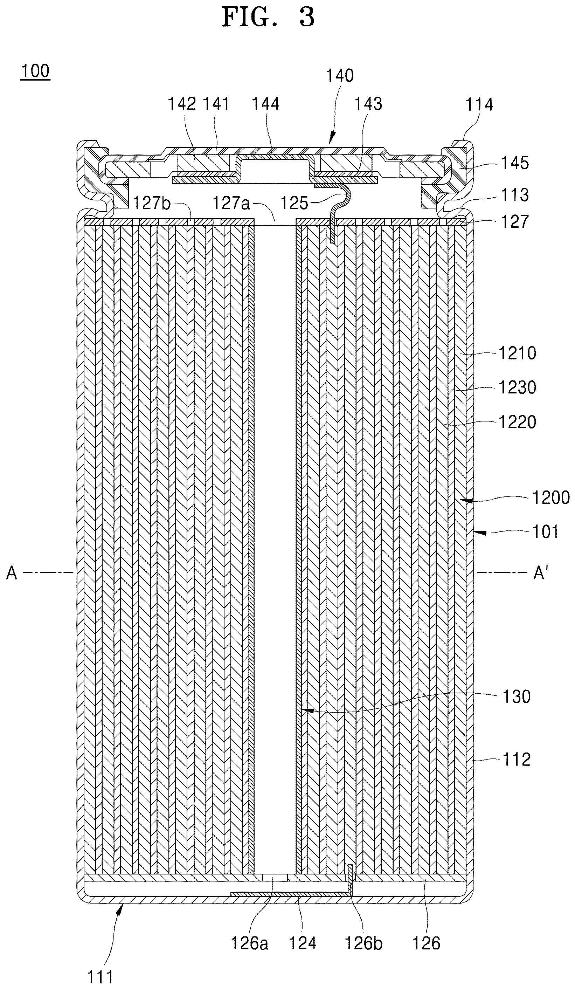

FIG. 1 is a perspective view schematically illustrating a battery pack according to an embodiment, FIG. 2 is a perspective view schematically illustrating a battery cell of the battery pack of FIG. 1, and FIG. 3 is a cross-sectional view schematically illustrating an electrode assembly of a battery cell taken along line A-A' of FIG. 2.

Referring to FIGS. 1 to 3, a battery pack 10 according to an aspect of an embodiment of the disclosure may include a first battery module 11 and a second battery module 12 each including a plurality of battery cells 100, a busbar 110 and a busbar 120 electrically connecting the plurality of battery cells 100 to each other, and a circuit board 200 positioned between the first battery module 11 and the second battery module 12.

The battery pack 10 may include at least one of battery module 11 and battery module 12 and a pack housing 13 in which an accommodation space for at least one of the battery module 11 and battery module 12 is formed.

The first battery module 11 and the second battery module 12 each may be provided with a plurality of battery cells 100 and a module housing 14. The battery cells may be accommodated inside the module housing 14 in a laminated form. The battery cells 100 each may be provided with a positive lead and a negative lead. The battery cells 100 each may be a cylindrical-type, square-type, or pouch-type battery cell 100 depending on the shape of a battery, but in the disclosure, a cylindrical-type battery cell 100 is described as an example.

The battery pack 10 may be configured by a single cell stack arranged in a laminated form, instead of the first battery module 11 and the second battery module 12. The cell stack may be accommodated in the accommodation space of the pack housing 13 or in an accommodation space partitioned by frames, bulkheads, or the like.

The battery cell 100 may generate a large amount of heat during charging/discharging. The generated heat may be accumulated in a battery cell 100 and promote deterioration of the battery cell 100. Accordingly, the battery pack 10 may further include a cooling member to suppress deterioration of a battery cell 100. The cooling member may be provided at the bottom of a receiving space where a battery cell 100 is provided but is not limited thereto and may also be provided at the top or at the side thereof depending on the battery pack 10.

The battery cells 100 each may discharge exhaust gases to the outside of the battery cell, the gases being generated inside the battery cell 100 under abnormal operating conditions, also known as thermal runaway or a thermal event. The battery pack 10 or the first battery module 11 and the second battery module 12 may be provided with exhaust ports for discharging exhaust gases to prevent damage to the battery pack 10 or modules, the damage being caused by the exhaust gases.

A battery pack 10 may include a first battery module 11 and a second battery module 12 within a pack housing 13 of the battery pack. The first battery module 11 and the second battery module 12 each may include a module housing 14, and the module housing 14 may accommodate a plurality of battery cells 100.

A circuit board 200 may be included between the first battery module 11 and the second battery module 12 within the pack housing 13.

The circuit board 200 may be a circuit board 200 of a battery management system (BMS). The circuit board 200 may be electrically connected to a temperature sensor for measuring a temperature of a battery cell, a voltage sensor, and the like, and may control charging and discharging of the battery cell 100.

The circuit board 200 may be connected to a unit cell such as a battery cell 100 and may be used to manage the state of a battery cell 100.

The circuit board 200 may be configured to measure and identify the voltage, current, temperature, or the like of a battery cell 100 through a sensor within the battery pack 10.

Through this, the state of charge and health of a battery cell 100 may be predicted, and by controlling overcharge, overdischarge, and overcurrent of a battery cell 100, the uneven lifespan deviation (or variation) between the battery cells 100 may be reduced.

The busbar 110 and busbar 120 may electrically connect battery cells 100 and a circuit board 200 to each other. In some embodiments, the busbar 110 and busbar 120 each may serve to transmit the state of a battery cell 100 to another battery cell 100.

The first battery module 11 and the second battery module 12 may include a busbar 110 and a busbar 120, respectively. In some embodiments, the busbar 110 and busbar 120 may be divided into a first battery module busbar 110 connected to the upper portion of the first battery module 11 and a second battery module busbar 120 connected to the upper portion of the second battery module 12.

The busbar 110 and busbar 120 each may include a metal conductive material and may act as a conductor of current. The busbars 110, 120 may include highly conductive materials such as copper (Cu) and aluminum (Al), but the present disclosure is not limited thereto.

In some embodiments, the busbar 110 and busbar 120 each may be coated with an insulation material to prevent an electrical short circuit and ensure safety.

Accordingly, the busbar 110 and busbar 120 may ensure the stable operation of an electrical system, and electrical components may be safely connected to each other and aligned to minimize the risk of distortion or malfunction of the components due to internal vibration. In some embodiments, the busbars may be connected to a circuit board 200 and may transmit the overall state of a battery cell 100 in real time.

In some embodiments, a battery cell 100 of cylindrical lithium-ion type may include a cylindrical can 101, an electrode assembly 1200, and a cap assembly 140. In some embodiments, the battery cell 100 of cylindrical lithium-ion type may further include a center pin 130 as the case may be. In some embodiments, in a battery cell 100 according to an embodiment of the disclosure, the cap assembly 140 may also perform a current interruption operation, and therefore, in some cases, the cap assembly is also referred to as a current interrupt device.

The diameter of a battery cell 100 may be, for example, approximately 46 mm, but is not limited thereto. The cylindrical can 101 surrounding the surface of the battery cell 100 may include a bottom portion 111 of an approximately circular shape and a cylindrical side wall 112 extending in an upper direction by a certain length from the perimeter of the bottom portion 111. During the manufacturing process of the battery cell, the upper portion of the cylindrical can 101 may be open. As illustrated in FIG. 3, during the assembly process of a battery cell, an electrode assembly 1200 and a center pin 130 may be inserted into a cylindrical can 101 together with electrolyte. In some embodiments, the cylindrical can 101 may be manufactured with steel, stainless steel, aluminum, an aluminum alloy or an equivalent thereof.

In some embodiments, the cylindrical can 101 may include a beading part 113 sunken inwardly at the lower portion of the cap assembly 140 centered therearound to prevent the cap assembly 140 from being detached to the outside, and a crimping part 114 bent inwardly at the upper portion of the cap assembly.

The electrode assembly 1200 may be accommodated inside the cylindrical can 101. The electrode assembly 1200 may include a negative electrode plate 1210 in which a negative electrode active material (e.g. graphite, carbon) is coated on a negative electrode collector plate, a positive electrode plate 1220 in which a positive electrode active material (e.g. transition metal oxide (LiCoO2, LiNiO2, LiMn2O4)) is coated on a positive electrode collector plate, and a separator 1230 positioned between the negative electrode plate 1210 and the positive electrode plate 1220 to prevent short circuiting and only allow movement of lithium ions. In some embodiments, the negative electrode plate 1210, positive electrode plate 1220, and separator 1230 may be wound in a roughly cylindrical shape. In some embodiments, the negative electrode current collector may be manufactured with copper (Cu) foil, the positive electrode current collector may be manufactured with aluminum (Al) foil, and the separator may be manufactured with polyethylene (PE) or polypropylene (PP), but this is not limited thereto.

In some embodiments, a negative electrode tab 124 of the electrode assembly 1200 may be welded to the bottom portion 111 of the cylindrical can 101. Accordingly, the cylindrical can 101 may act as a negative electrode. In some embodiments, conversely, a positive electrode tab 125 may be welded to the bottom portion 111 of the cylindrical can 101, in which case the cylindrical can 101 may act as a positive electrode.

In some embodiments, a first insulation plate 126 coupled to the cylindrical can 101 and having a first hole 126a formed at the center and a second hole 126b formed at the outside thereof may be interposed between the electrode assembly 1200 and the bottom portion 111. Such a first insulation plate 126 may serve to prevent the electrode assembly 1200 from making electrical contact with the bottom portion 111 of the cylindrical can 101. In some embodiments, the first insulation plate 126 may serve to prevent the positive electrode plate 1220 of the electrode assembly 1200 from making electrical contact with the bottom portion 111. In this regard, in case that a large amount of gas is generated due to an abnormality in a battery cell, the first hole 126a may serve to allow gas to quickly move upward through the center pin 130, and the second hole 126b may serve to allow the negative electrode tab 124 to pass through and be welded to the bottom portion 111.

In some embodiments, a second insulation plate 127 coupled to the cylindrical can 101 and having a first hole 127a formed at the center and a plurality of second holes 127b formed at the outside thereof may be interposed between the electrode assembly 1200 and the cap assembly 140. Such a second insulation plate 127 may serve to prevent the electrode assembly 1200 from making electrical contact with the cap assembly 140. In some embodiments, the second insulation plate 127 may serve to prevent the negative electrode plate 1210 of the electrode assembly 1200 from making electrical contact with the cap assembly 140. In this regard, in case that a large amount of gas is generated due to an abnormality in a battery cell, the first hole 127a may serve to allow gas to move quickly to the cap assembly 140, and a second hole 127b may serve to allow the positive electrode tab 125 to pass through and be welded to the cap assembly 140. In some embodiments, the remaining second holes 127b may serve to allow electrolyte to quickly flow into the electrode assembly 1200 during the electrolyte injection process.

In some embodiments, the diameter of the first hole 126a of the first insulation plate 126 and the diameter of the first hole 127a of the second insulation plate 127 are formed smaller than the diameter of the center pin 130, thereby preventing the center pin 130 from electrically contacting the bottom portion 111 or the cap assembly 140 of the cylindrical can 101 due to external impacts.

The center pin 130 is a hollow, cylindrical pipe shape and may be coupled approximately to the center of the electrode assembly 1200. In some embodiments, such a center pin 130 may be manufactured with steel, stainless steel, aluminum, aluminum alloy or polybutylene terephthalate, but this is not limited thereto. Such a center pin 130 may serve to suppress the deformation of the electrode assembly 1200 during charging and discharging of a battery and serve as a passage for gas generated inside a battery cell. In other embodiments, such a center pin 130 may be omitted, as the case may be.

The cap assembly 140 may include a top plate 141, a middle plate 142, an insulation plate 143, and a bottom plate 144.

The middle plate 142 may be positioned under the top plate 141 and may have a roughly flat shape.

The insulation plate 143 may be formed in a circular ring shape having a certain width when viewed from below. In some embodiments, such an insulation plate 143 may serve to insulate the middle plate 142 and the bottom plate 144 from each other. In some embodiments, the insulation plate 143 may be interposed between the middle plate 142 and the bottom plate 144 to be ultrasonically welded, but this is not limited thereto.

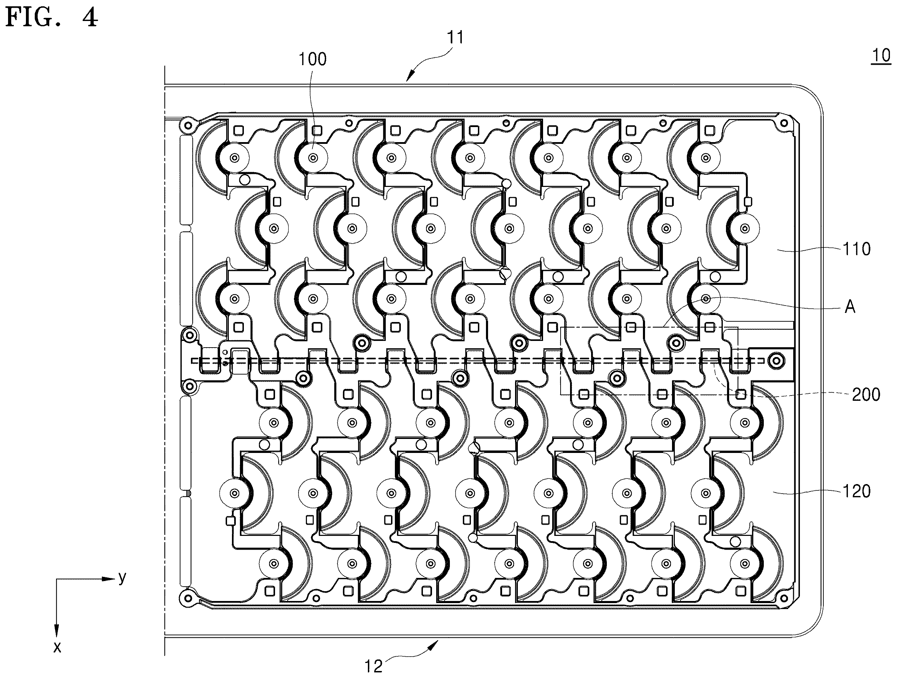

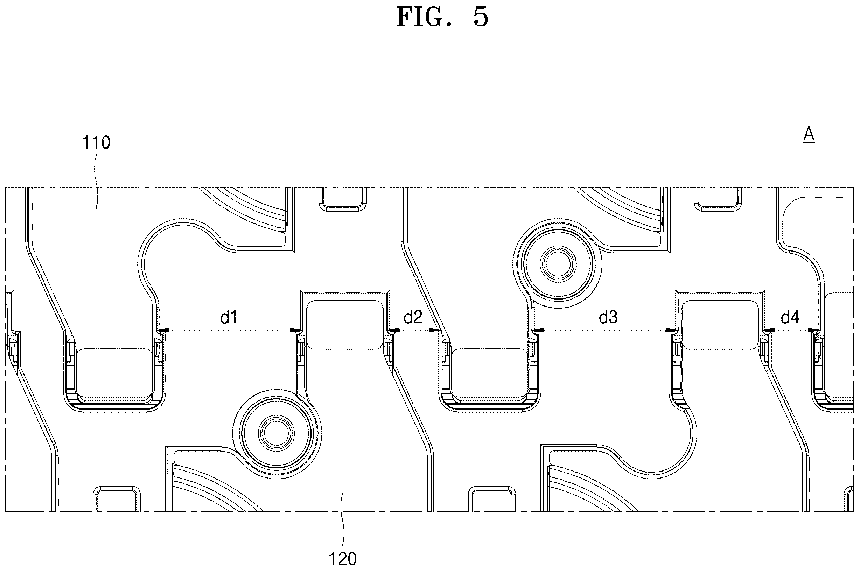

FIG. 4 is a plan view schematically illustrating the battery pack of FIG. 1, and FIG. 5 is a diagram schematically illustrating an area A of FIG. 4.

Referring to FIGS. 4 and 5, a busbar 120 of the second battery module 12 arranged between two adjacent busbars 110 of the first battery module 11 may have different separation distances d1 and d2 from the two adjacent busbars 110 of the first battery module 11.

A battery pack 10 according to an embodiment of the disclosure may further include a connection member for internal assembly within the module housing 14. Depending on such an arrangement of a connection member, adjacent first battery module busbars 110 and second battery module busbars 120 provided between the adjacent first battery module busbars 110 may not be positioned at the center of the busbars 110 of the first battery module 11.

Accordingly, two adjacent first battery module busbars 110 of the first battery module 11 and a second battery module busbar 120 may have different separation distances d1 and d2 from each other.

In some embodiments, the distance d1 between adjacent first battery module busbars 110 and one second battery module busbar 120 provided between the adjacent first battery module busbars 110 and the distance d3 between another pair of adjacent first battery module busbars 110 and another second battery module busbar 120 provided between the other adjacent first battery module busbars 110 may be different from each other.

In some embodiments, the distance d1 between a first battery module busbar 110 and a second battery module bar busbar 120 and the distance d3 between another first battery module busbar 110 and another second battery module busbar 120 may be different from each other.

Accordingly, by providing distances d1, d2, d3, and d4 between busbars 110 and busbars 120 at unequal intervals (e.g., irregular spacing), free spaces between connection members in a battery pack 10 may be secured, and a stable battery pack 10 may be obtained.

Through these free spaces, shorts between battery cells 100 and busbars 110 and busbars 120 and connection members may be reduced.

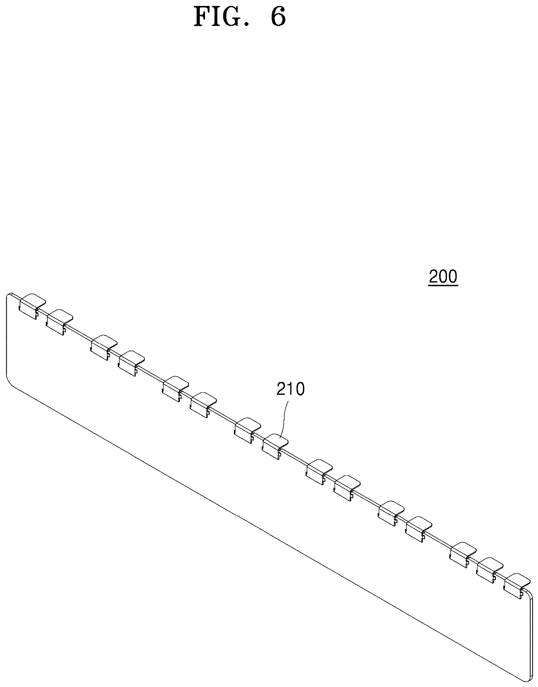

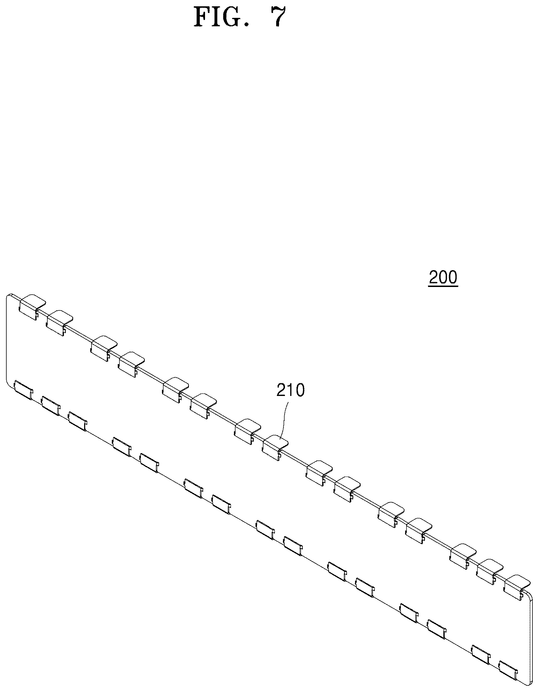

FIGS. 6 and 7 are perspective views schematically illustrating an embodiment of a circuit board 200.

Referring to FIGS. 6 and 7, the circuit board 200 may include a plurality of tabs 210 electrically connected to the busbars 110 and busbars 120.

In an embodiment, cylindrical battery cells 100 each may have a positive electrode or a negative electrode at the top or bottom thereof, respectively.

The battery cells 100 of the first battery module 11 and the second battery module 12 may be electrically connected to each other in parallel by arranging the battery cells 100 such that they are all oriented in the same direction based on the negative or positive electrodes, but adjacent battery cells 100 may also be electrically connected to each other in series by alternately arranging the negative and positive electrodes.

In an embodiment in which the battery cells 100 are connected to each other in parallel with the same electrodes on a side, a plurality of tabs 210 may be provided on a side of the circuit board 200 for electrical connection with the battery cells 100 and may be arranged along the longitudinal edge of the circuit board 200.

In some embodiments in which adjacent battery cells 100 are connected to each other in series with the negative and positive electrodes alternately arranged, the plurality of tabs 210 may be arranged along the edges of opposite sides of the circuit board 200.

As illustrated in FIG. 7, the plurality of tabs 210 arranged along the edges of opposite sides of the circuit board 200 may be arranged to include the same shape when rotated 180° around the center of the circuit board 200.

Even in case that the battery cells 100 are electrically connected to each other in series with the negative and positive electrodes alternately arranged, the size of the space for accommodating the battery cells 100 and the accommodation area of the module housing 14 may be the same as in parallel connection where an electrode is aligned on a side.

In some embodiments, in the case of a series connection in which positive and negative electrodes are arranged alternately on a side, busbars 110 and busbars 120 may be also provided on the lower sides of the battery module 11 and battery module 12, so the circuit board 200 may be also required to be connected to the lower sides of the battery module 11 and battery module 12.

Accordingly, the plurality of tabs 210 may be arranged to include the same shape when rotated 180° with respect to the plane of the circuit board 200 for connection with the battery cells 100, thereby facilitating connection to the busbars 110 and busbars 120 arranged on the lower sides.

In some embodiments in which the intervals between busbars 110 and busbars 120 formed toward the upper surface the battery pack 10 are provided irregularly and the intervals between the tab 210 corresponding to the busbars 110 and busbars 120 are arranged irregularly, the busbars 110 and busbars 120 positioned at the lower side of the battery pack 10 may also be provided with irregular intervals like the busbars 110 and busbars 120 toward the upper surface of the battery pack, and therefore, the arrangement of the tabs 210 may also be irregular (i.e., spaced unevenly).

Accordingly, in an embodiment in which the extension of the lower side of the circuit board 200 of the tabs 210 is provided for serial connection, the existing tabs 210 may be additionally arranged in the shape similar to that of a 180° rotation with respect to the circuit board 200, as shown in FIG. 7.

Through this, the battery pack 10 according to an embodiment of the disclosure may freely connect the circuit board 200 and the battery cells 100 through a plurality of tabs 210 regardless of the direction in which the battery cells 100 are arranged and may support both series connection and parallel connection without additional connection members, thereby saving space.

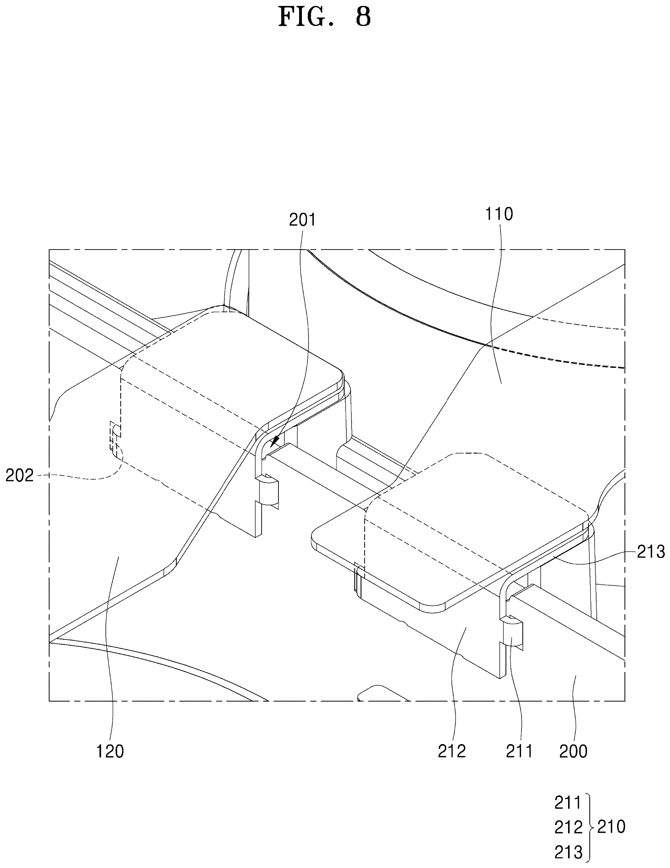

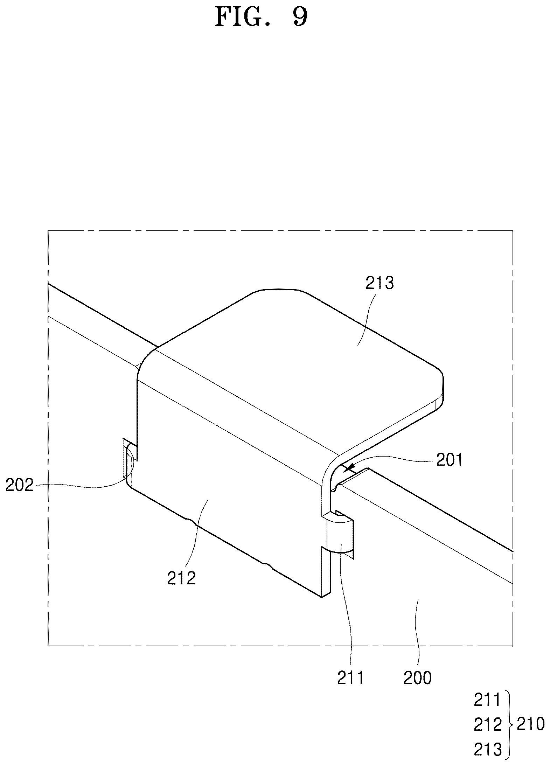

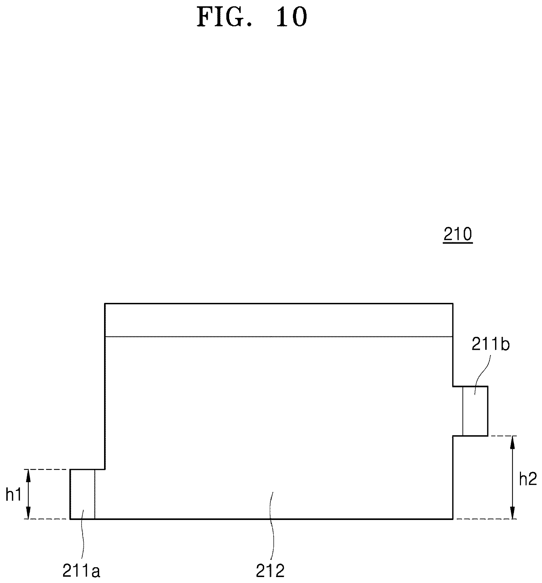

FIGS. 8 to 10 are diagrams schematically illustrating an embodiment of a tab 210 of FIG. 7.

Referring to FIGS. 8 to 10, each of the plurality of tabs 210 may include at least two fastening portions 211 extending from opposite ends (or opposite sides) of the tabs 210.

In some embodiments, the at least two fastening members 211 may be inserted into a surface of the circuit board 200 so that the tabs 210 may be coupled to the circuit board 200.

The circuit board 200 and the plurality of tabs 210 may be connected through the fastening members 211, and the fastening members 211 may be formed in the shape of two arms extending from each of the tabs 210.

A fastening portion 211 may have two fastening portions by extending from each of the edges at the opposite ends of the tabs 210, but to securely fix the tabs 210, the fastening portion 211 may be formed in more than two numbers. In one or more embodiments, the number of fastening portion(s) 211 at each of opposite ends of the tabs 210 may be the same such that they are provided in an even number.

The fastening portion 211 and the circuit board 200 may be attached through precision welding such as laser welding, but the present disclosure is not limited thereto.

In some embodiments, the circuit board 200 may include a plurality of holes 202, and the plurality of holes 202, which are adjacent to each other, may have different heights.

The fastening portions 211 of the tabs 210 may be fastened by being inserted into the plurality of holes 202 in the circuit board 200, and the arrangements of the plurality of holes 202 may vary depending on the number and shape of the fastening portions 211.

In some embodiments, the tabs 210 each may include a metal conductor to electrically connect the circuit board 200 and the busbars 110 and busbars 120 to each other.

As illustrated in FIG. 8, a first battery module busbar 110 and a second battery module busbar 120 may be alternately connected to the circuit board 200.

In some embodiments in which the first battery module busbar 110 is connected to one tab 210, an adjacent tab 210 may be connected to the second battery module busbar 120.

Through this, the busbars 110 and busbars 120 may secure the circuit board 200, and because the battery module 11 and battery module 12 surround the circuit board 200, the direct effects of external impacts on the circuit board 200 may be minimized (or at least reduced), thereby preventing (or at least mitigating) damage due to impacts.

In some embodiments, because the battery module 11 and battery module 12 are fixed on opposite sides of the circuit board 200, the circuit board 200 may not be separated during use, and the bonding with the battery module 11 and battery module 12 may be increased, thereby increasing the stability and the reliability of use of the battery pack 10.

In some embodiments, the tabs 210 may include an overlapping portion 212 overlapping with the circuit board 200 and an extension portion 213 extending from the overlapping portion 212 to the outside of the circuit board 200. In one or more embodiments, the extension portion 213 may be bent parallel (or substantially parallel) to a side of the circuit board 200.

The tabs 210 may include an extension portion 213, which covers a side of the circuit board 200 and extends to be electrically connected to busbars 110 and busbars 120. In one or more embodiments, the extension portion 213 may be bent separately from an overlapping portion 212.

In some embodiments, the extension portion 213 may be bent at an angle greater than 0° and less than or equal to approximately 90° with respect to the overlapping portion 212.

An extension portion 213 may be bent at a certain angle to facilitate connection with busbars 110 and busbars 120. In some embodiments, the extension portion 213 may be bent at an acute angle. The bending angle of the extension portion 213 may vary depending on the height or arrangement of the circuit board 200.

In some embodiments in which the height of the circuit board 200 is higher than the height of a battery cell 100, the extension portion 213 may be bent by less than approximately 90° to be properly connected to the circuit board 200.

The fastening portions 211 may be positioned at (or on) the overlapping portion 212, and the fastening portions 211 may be bent toward the circuit board 200 to be inserted into the circuit board 200 in the thickness direction of the circuit board 200.

The overlapping portion 212 may be in direct contact with the circuit board 200 and the fastening portions 211 may be electrically and physically connected to the circuit board 200. To connect the circuit board 200 and fastening portions 211 to each other, the fastening portions 211 may extend from the opposite edges of the overlapping portion 212 which is relatively close to the circuit board 200.

In some embodiments, the extension portion 213 may be directly connected to a busbar 110 and busbar 120 by fastening methods such as welding, and physical fastening methods such as bolts may also be used, but the present disclosure is not limited thereto.

The circuit board 200 may include a concave portion 201 in the shape of a groove inwardly concave (e.g., a recess) from the side of the circuit board 200 at a position corresponding to the extension portion 213.

The extension portion 213 may be bent toward the side of the circuit board 200 such that the concave portion 201 may have an appropriate clearance (e.g., a gap) between the extension portion 213 and the circuit board 200.

The fastening portion 211 may include a first fastening portion 211a and a second fastening portion 211b positioned at the opposite side of the first fastening portion 211a, and the first fastening portion 211a and the second fastening portion 211b may be positioned at different heights from the bottom surfaces of the tabs 210 (e.g., the first fastening portion 211a and the second fastening portion 211b may be vertically staggered).

An overlapping portion 212 may include at least two fastening portions 211 (e.g., 211a and 211b) such that the fastening portions 211 may not be separated from the circuit board 200 and each may be divided into a first fastening portion 211a and a second fastening portion 211b.

In some embodiments, the first fastening portion 211a may be positioned on the same surface as the bottom surfaces of the tabs 210, and may have the same bottom surface (e.g., the bottom surface of the first fastening portion 211a may be coplanar with the bottom surface of the tab 210), and a bottom surface of the second fastening portion 211b may be spaced apart from the bottom surface of the tab 210 by height h2. In one or more embodiments, the height h2 of the bottom surface of the second fastening portion 211b may be at a higher position than the thickness h1 of the fastening portion.

Through this, even in a situation where vibration occurs in the battery pack 10, the connection between a fastening portion 211 and the circuit board 200 may not become loose and a stable connection may be maintained.

In some embodiments, when a worker assembles fastening portions 211, it may be possible to guide the worker to work without confusing the left and right of a fastening portion 211 (e.g., the asymmetry of the first and second fastening portions 211a and 211b is configured to ensure that the tab 210 is not installed backwards).

According to the embodiments, the vibration and shock stability of a circuit board provided in a battery pack may be improved.

Although the above has been described with reference to the embodiments illustrated in the drawings, these are merely example, and those skilled in the art will understand that various modifications and equivalent other embodiments are possible from this. Therefore, the true technical protection scope of the disclosure should be determined by the technical idea of the appended claims.

## Claims

1. A battery pack, comprising:
a first battery module and a second battery module each comprising a plurality of battery cells;
a plurality of busbars electrically connecting the plurality of battery cells to each other; and
a circuit board positioned between the first battery module and the second battery module, wherein:
the circuit board comprises a plurality of tabs electrically connected to the plurality of busbars,
each tab of the plurality of tabs comprises at least two fastening portions extending from opposite ends of the each tab, and
the at least two fastening portions extend into a surface of the circuit board such that the plurality of tabs are coupled to the circuit board.

2. The battery pack of claim 1, wherein:
each tab of the plurality of tabs comprises an overlapping portion overlapping the circuit board and an extension portion extending from the overlapping portion to an outside of the circuit board, and
the extension portion is substantially parallel to a side of the circuit board.

3. The battery pack of claim 2, wherein the circuit board comprises a concave groove from the side of the circuit board at a position corresponding to the extension portion.

4. The battery pack of claim 2 or 3, wherein the extension portion is bent at an angle greater than 0° and less than or equal to approximately 90° with respect to the overlapping portion.

5. The battery pack of claim 2, 3 or 4, wherein:
the extension portion is electrically connected to the busbar, and
the overlapping portion is electrically connected to the circuit board.

6. The battery pack of any preceding claim, wherein a busbar of the plurality of busbars connected to the second battery module, which is arranged between two adjacent busbars of the plurality of busbars connected to the first battery module, has different separation distances from the two adjacent busbars connected to the first battery module.

7. The battery pack of any preceding claim, wherein the plurality of tabs is arranged along an edge of a side of the circuit board.

8. The battery pack of any preceding claim, wherein:
the plurality of tabs is arranged along edges of opposite sides of the circuit board, and
the plurality of tabs arranged along the edges of opposite sides of the circuit board have a same shape when rotated 180° around a center of the circuit board.

9. A battery pack, comprising:
a first battery module and a second battery module each comprising a plurality of battery cells;
a plurality of busbars electrically connecting the plurality of battery cells to each other; and
a circuit board positioned between the first battery module and the second battery module; wherein:
the circuit board comprises a plurality of tabs electrically connected to the plurality of busbars,
each tab of the plurality of tabs comprises at least two fastening portions extending from opposite ends of the each tab,
each of the at least two fastening portions is bent in a thickness direction of the circuit board and extends into the circuit board in a thickness direction of the circuit board, and
heights from a bottom surface of the each tab to the at least two fastening portions are different from each other.

10. The battery pack of claim 9, wherein:
each of the plurality of tabs comprises an overlapping portion overlapping the circuit board and an extension portion extending from the overlapping portion to an outside of the circuit board, and
the extension portion is substantially parallel to a side of the circuit board.

11. The battery pack of claim 10, wherein the circuit board comprises a concave groove in the side of the circuit board at a position corresponding to the extension portion.

12. The battery pack of claim 10 or 11, wherein:
the at least two fastening portions are positioned at the overlapping portion, and
the at least two fastening portions extend into a surface of the circuit board.

13. The battery pack of claim 10, 11 or 12, wherein:
the extension portion is electrically connected to a busbar of the plurality of busbars, and
the overlapping portion is electrically connected to the circuit board.

14. The battery pack of any one of claims 9 to 13, wherein:
the plurality of tabs is arranged along an edge of a side of the circuit board, and
the plurality of busbars is connected to the plurality of tabs.

15. The battery pack of any one of claims 9 to 14, wherein:
the plurality of tabs is arranged along edges of opposite sides of the circuit board, and
the plurality of tabs arranged along the edges of opposite sides of the circuit board have a same shape when rotated 180° around a center of the circuit board.
